# EUROPEAN PATENT SPECIFICATION

(11) **EP 0 880 422 B1**
(45) Date of publication and mention of the grant of the patent: **12.12.2001**
(21) Application number: 96918427.4
(22) Date of filing: 11.06.1996
(51) Int. Cl.: B23P 15/40, C21D 1/09

(54) **CUTTING DIE AND METHOD OF MAKING**
STANZMESSER UND HERSTELLUNGSVERFAHREN
EMPORTE-PIECE ET PROCEDE DE FABRICATION

(30) Priority: 15.02.1996 US 603039
(43) Date of publication of application: 02.12.1998
(73) Proprietor: Bernal International, Inc., Owosso, MI 48867 (US)
(72) Inventor: ZHANG, Yu, Troy, MI 48084 (US); CHERNG, Tzyh-Chyang, Howell, MI 48843 (US)
(74) Representative: Findlay, Alice Rosemary
(86) International application number: US9609907
(87) International publication number: WO9729878

(56) References cited:
- WO-A-91/01386
- DE-A- 2 013 674
- US-A- 4 608 895
- US-A- 5 417 132
- PATENT ABSTRACTS OF JAPAN vol. 18, no. 443 (C-1239), 18 August 1994 & JP,A,06 136431 (HONDA), 17 May 1994,
- PATENT ABSTRACTS OF JAPAN vol. 13, no. 472 (C-647), 25 October 1989 & JP,A,01 184218 (MAZDA), 21 July 1989,
- PATENT ABSTRACTS OF JAPAN vol. 6, no. 139 (C-116), 28 July 1982 & JP,A,57 063632 (TOSHIBA), 17 April 1982,

## Description

### Background of the Invention

This invention relates to cutting dies and, in particular, to the manufacture of dies for cutting various stock materials.

Cutting dies are known for cutting or severing one portion of a stock material from another. For example, cutting dies are used for cutting sheets of paperboard or plastic or metal into predetermined blanks. In one form of known cutting operation, two rotary cylinders, each having small integral cutting blades extending radially from the cylindrical surface, are juxtaposed so that when rotated, the blades engage generally opposite sides of a work stock and cooperate to sever the stock into a blank, the shape of which is determined by the blade configuration. One such operation is illustrated in U.S. Patent No. 4,608,895.

The process of forming each cylindrical die requires certain process treatments to insure the blades will provide the desired cutting action over a long operational life. Specifically, the blades must be very hard in order to provide sufficient blade life before reconditioning is required.

In one form of die preparation then, an entire die cylinder of appropriate size is heat-treated to bring the cylinder's surface to a requisite hardness, on the order, for example ,of about HRC 60 on the Rockwell hardness scale. Since the blades are formed integrally from the cylinder, the next process is to remove cylinder material to form and define the integral blades which are to extend radially outwardly from the cylinder's surface. While it might be possible to mill the surface down to form the blades, the hardness of the cylinder makes milling a bad choice.

Accordingly, it is known to use the process of electric discharge machining (EDM) to form the die. In this process, a graphite cylinder is formed in the negative configuration of the to-be-formed die cylinder and blades. The graphite cylinder and die cylinder are juxtaposed in an electrical discharging environment so the die cylinder metal is eaten away, leaving the hardened cutting blades extending upwardly from the surface. This is a slow process and, where the cylinder is large, such as twelve inches (50.8 cm) or even more in diameter and several feet long, the process can take days.

Manufacturers have attempted to form the die first, then harden it. This reversed procedure does not work well. The cylinder and its extended blades must be heated to an austentiting temperature, which is about 1500° F (815.56°C) for 4150 steel or about 1900° to 2000° (1037.78 to 1093.33°C) for D2 steel, in order to produce the desired blade hardness. When such a preformed cylinder is removed from the furnace to cool down, it may distort or crack in the areas around or in the die blades. This distortion is believed to be due to several principles, including thermal deformation and phase transformation deformation resulting from differential cooling rates between the relative low mass blades and high mass cylinder, and between surface and interior of a die.

More particularly, when the cylinder cools, its surface cools faster than the interior. Uneven volume change due to both thermal and phase transformation causes the die to crack or to distort beyond acceptable limits. Also, in order to produce the hardening required, the metal must be heated to the necessary level to cause the desired phase transformation. While such phase transformation in the blades is desired in order to produce the desired hardness, the fast cooling required from an austeniting temperature of about 1500° F (815.56°C) up to about 2000 F (1093.33°C) (depending on the steel type) to produce the phase transformation is a cause of undesirable cracking and distortion of the blades on the cylinder due to the varied rates of phase transformation. Such phase transformations in the metal take place at different rates due to the heat distribution throughout the varied mass configuration of the blades and the cylinder. This produces volumetric or density changes which can cause cracking or distortion, particularly in the blades and on the cylinder surface.

Thus the difficulty faced by a die manufacturer is the conflict between the need for hard blades for die life and the preferability of soft surface material for formation of the die blades. When the die is first hardened, a slow, expensive and capital intensive EDM process is required to form the blades. If the blades are first milled, then the cylinder heated and cooled to harden the blades, distortion and cracking may result.

US Patent No. 5417132 describes a method for producing a rotary die cylinder with lands having cutting edges (see pre-characterising portion of claim 1). The lands are formed by machining portions of a cylindrical surface and are then hardened by heat treatment utilizing a laser beam.

Accordingly, it is one objective of the invention to provide an improved process for manufacturing a cutting die.

Another objective of the invention is to provide a die manufacturing process where the blades can be inexpensively milled or formed and later hardened without the distortion and cracking of the prior process noted above.

Another object of the invention is to produce a cylindrical cutting die with hardened blades at a faster rate, less expensively, and without capital intensive equipment such as EDM processing requires.

The invention provides a method for producing a cutting die including the steps of forming at least two cutting blades extending from a die surface, hardening the cutting blades by scanning one of the blades with a heat source of sufficient intensity to harden the blade and thereafter scanning the other blade with the heat source to harden the other blade, characterised in that the blades are formed such that they intersect and in that the method includes either introducing a coolant toward said one previously-hardened cutting blade proximate the blade intersection during scanning of the other blade or varying the energy of the heat source as it scans the blades, at their intersection to reduce annealing of said one previously-hardened cutting blade.

In accordance with a preferred embodiment of the invention, the invention contemplates preliminary formation of blades on a die cylinder by milling the cylinder and subsequently hardening the blades by scanning them with a high energy beam, such as a laser. A laser is controlled by five axis CNC technology to scan each blade, raise it to an austeniting temperature and then allow the blade to cool in air to complete the hardening process by self-quenching. Since the laser beams can be focused to increase the intensity, temperature in the blade can be raised instantly and heat conduction into the cylinder is then minimized and cracking and distortion on cooling eliminated or significantly reduced.

Such process is particularly effective on low alloy steels such as 4150 steel. The process may be more difficult to use on high alloy steels, such as D-2 steel which is a high carbon, high alloy steel, due to the necessity of producing a desired case or hardness depth. If the traverse speed is too quick, not enough heat is applied to reach the austeniting temperatures or not enough time is allowed to generate a desired case depth. If too slow, the blade or underlying cylinder or plate can be melted under the high intensity beam. This indicates that the processing parameters have a narrow window for D-2 steel.

Several parameters are observed in the die formation. First, the blades must be of sufficient predetermined height as to provide the capacity to be rebuilt several times after wear, nicking and the like. This process provides for hardening blades of such sufficient height and to a desired case depth such that there is no significant measurable distortion and such that there is sufficient case depth of enough hardness.

In another consideration, it is frequently desirable to form the blades into die pattern shapes requiring the blades on a cylinder to intersect. When the laser is scanned along one blade, it will affect at least portions of any intersecting blade. If that intersecting blade has already been hardened, the laser may anneal portions of it near the blade being treated, causing softer spots in the previously-treated blades near the blade intersections.

Considering a temperature profile resulting from heat conduction, for example, in 4150 steel, the center path is at or above the minimum austeniting temperature (such as 1500° F (815.56°C) for 4150 steel) for hardening. Immediately adjacent portions may be in a temperature range just below the minimum austeniting temperature, but above an annealing temperature of about 550° F (287.78°C), insufficient to harden, but hot enough to anneal, while outer portions are at lower temperatures not enough to anneal significantly. The adjacent intersecting portions of blades thus may be hardened while a small band of the previously-treated blade on each side of the intersection may only be annealed.

Whether or not such limited soft bands near the intersection will effectively reduce die life is not certain. The annealed, softer bands may be so small as to not cause disparities in the cut stock, such stock being supported by the adequately hardened blade portions on each side of the softer or annealed portions.

Nevertheless, and in accordance with the invention, the soft or anneal bands are minimized by several further procedures. First, the traverse speed and intensity of the laser are controlled to vary the quantum of heat introduced at the intersection from that introduced elsewhere. By selection of traverse speed and intensity, the annealing affect in the blades is reduced and the softer band areas are limited.

In a second procedure, the laser is supplemented with injections of low temperature media, such as liquid nitrogen. This is selectively flowed through nozzles on each side of the laser onto the previously-treated blade to significantly limit the extent of any temperature band or gradient within an annealing range. Any annealed area in the previously-treated blade is significantly limited or minimized so it does not become a factor in the otherwise useful life of the die.

There is thus provided a cutting die which can be formed by conventional, low cost milling techniques while nevertheless providing sufficiently hardened cutting blades without cracking or unacceptable distortion due to any hardening process.

These and other advantages will become readily apparent form the following detailed description of a preferred embodiment of the invention and from the drawings, in which:
Fig. 1 is a schematic view illustrating cutting die preparation according to the invention;
Fig. 2 is an illustrative plan view of intersecting die blades showing positions of partially annealed areas of a previously-hardened blade;
Fig. 3 is a view similar to Fig. 1 but also illustrating an alternative embodiment, including apparatus for cooling to reduce annealed areas in intersecting die blades;
Fig. 4 is an illustrative cross-sectional view of one die blade formed and hardened according to the invention; and
Fig. 5 is an illustrative depiction of the temperature profile of a hardening laser beam.

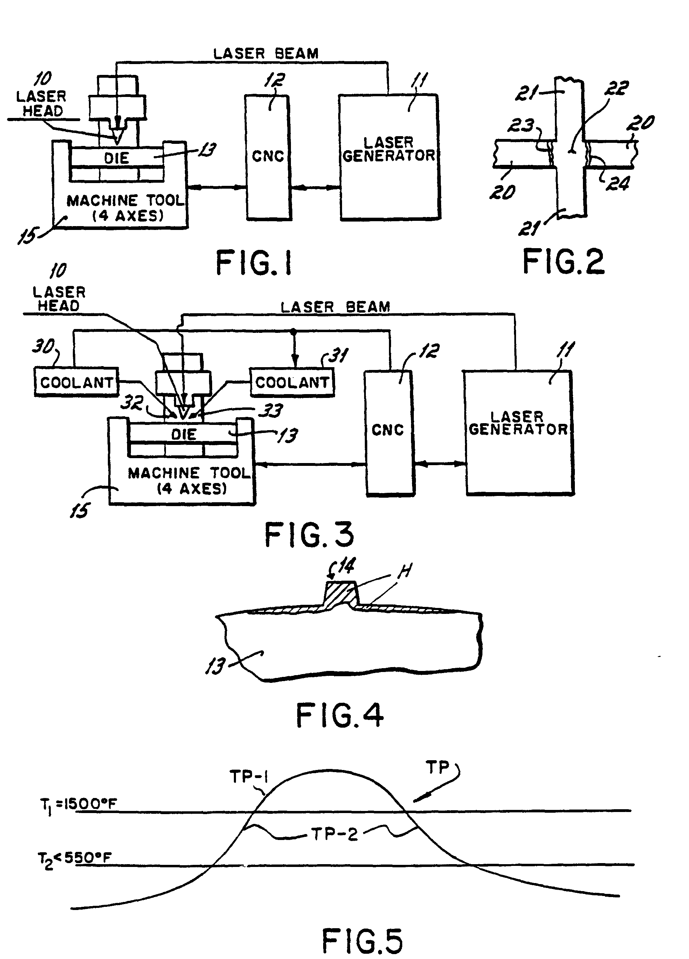

Turning now to Fig. 1, it will be appreciated there is there disclosed illustratively, apparatus for carrying out the method of the invention. In particular, the apparatus includes a CO₂ laser generator 11 of industrial quality. Such a CO₂ laser head 10 and laser generator 11 can be, for example, the laser manufactured by TRUMPF Incorporated of Farmington, Connecticut, according to its model no. TLF 2600 turbo. The path and intensity of laser beams can be controlled by a CNC 12. One such CNC is made by Boston Digital Corp. of Boston, Massachusetts under the model no. BD85-2. The die is mounted on a three, and preferably four axis machine tool 15. One such machine tool is made by Boston Digital Corp. under the model no. BD85-2.

A die cylinder 13, having a blade 14 thereon to be hardened, is mounted on a machine tool 15 interconnected as illustrated with the CNC machine 12. In this regard, the CO₂ laser beam 10 is controlled to scan the blades in a path or pattern along the extension of the die blade 14 on the die cylinder while the laser is energized, in order to impart heat to the blade for hardening the blade to an appropriate case depth.

The laser is energized and moved along the extension of the blade, thereby imparting heat into the blade, raising temperature and hardening the blade. Such hardening is illustrated in Fig. 4.

In Fig. 4, the blade 14 is illustrated on the die cylinder 13. After the laser beam has been scanned along the blade and has heated the material in the blade and the adjacent material in the cylinder, a hardness of a predetermined case depth is provided to the blade 14 and to the cylinder 13, as indicated by the cross-hatched area H at Fig. 4. Turning now briefly to Fig. 5, it will be appreciated that illustrated in this figure is the temperature distribution of a flat surface being heated by laser beam. The heat provided by the laser is relatively uniform across the cross section of the beam, however, the effect of heat transfer (convection, radiation and primarily conduction) will result in a temperature profile TP on the surface as depicted. In this regard, it will be appreciated that the center portion TP-1 of the temperature profile is relatively high, above 1500 F (815.56°C), for 4150 steel for example. It is desirable to raise blade temperature to above minimum austeniting temperature (1500 F (815.56°C) for 4150 steel) in order to produce phase transformation and harden the steel.

The temperature distribution caused by the heat conduction, is varied with distance to the beam center so that the temperature profile TP-2 close to the boundary of the precisely heated area will be something less than T₁, the minimum phase transformation temperature, but high enough (for example, above 550° F (287.78°C)) to anneal the adjacent area. Below T₁, the higher the temperature, the more annealing effect would happen and the softer the material would be. In Fig. 5, T₂ is the temperature below which no significant annealing effect would happen. Consequently the area between T₁ and T₂ will be the area where annealing process causes significant softening on the material.

Turning now to Fig. 2, the application of the heat signature illustrated in Fig. 5 will be more precisely understood in connection with this invention. In particular, there is illustrated in Fig. 2 a previously-hardened blade 20 which has already been scanned using the laser beam to harden the blade. Intersecting blade 21 is of similar height, such that the blades have a common or intersecting area 22. It will be appreciated that after the blade 20 has been hardened, further scanning of the intersecting blade 21 will apply a heat signature to the blade 21 for hardening it but, as well, in the intersecting area 22, will also apply the heat signature to the cross-over blade 20. For those areas of the metal heated by the heat signature lying between the temperatures T₁ and T₂, such as illustrated at the areas 23 and 24 in Fig. 2, those areas will be annealed from their previously-hardened state. The width and extension of the annealed areas 23 and 24 may present problems in terms of blade life and final cut stock appearance. Accordingly, it is desirable to reduce the width of the annealed areas 23 and 24 in blade 20 as much as possible.

In one aspect of the invention, the traverse speed, i.e. the scan speed of the laser beam relative to the die cylinder 13, as well as the beam's intensity, is controlled to minimize the width of the annealed areas 23 and 24 in the intersecting blade, the laser slightly sped up or the intensity slightly reduced, in order to still provide the desired hardness in the intersection 22, but to reduce the quantum of heat applied to the previously-hardened intersecting blades 20 and thereby reduce the overall extension of the softened or annealed areas 23 and 24. Depending on the particular width, intensity and traverse speed of the laser , the areas 23 and 24 can be controlled and minimized.

In another aspect of the invention, a coolant system is provided in order to minimize areas 23 and 24. Accordingly, and as shown in Fig. 3, a similar system as the system in Fig. 1 is described. In Fig. 3, an intersecting blade on the die cylinder 13 is illustrated. The intersecting blade 20 has previously been hardened by a laser scan along the extension of that blade and currently the blade 21 is being hardened by scanning of the laser beam along the blade. In order to reduce softened areas such as 23 and 24 illustrated in Fig. 2, in the blade 20, coolant from coolant sources 30 and 31 is applied by respective nozzles as illustrated at 32 and 33. Coolant is thus applied to the blade 20 alongside the extent of the laser beam generated by the laser head 10. The application of this coolant to the blade 20 on both sides of the blade 21 serves to maintain the adjacent areas or proximate areas of the blade 20 near the blade 21 at a temperature below the annealing temperature significantly minimizing the extent of any blade portion annealing.

The coolant can be any coolant media, preferably fluid such as liquid nitrogen, compressed air or other very low temperature coolant. As illustrated in Fig. 3, the application of the coolant is also controlled by the CNC 12, so that it is only necessarily applied to proximate areas of intersecting blades to that blade being hardened. It will also be appreciated it is not necessary to apply the coolant to an intersecting area for the first pass of the laser over that intersecting area. As the intersecting blade has not been previously hardened, any annealing temperature applied to that blade will not eventually affect the hardness once that second intersecting blade is scanned by the laser.

It will also be appreciated that the present invention is particularly described by using a laser beam as a heating source. Any other heating sources which can perform the same function as a laser, i.e. capable of raising temperature in the selective areas very quickly, could be used in this invented process of die making. For example, electron beam, ion beam or induction field technology might be used in this invention.

It will be appreciated that the present invention is particularly applicable to the hardening of die blades extending from a die surface, such as the cylinder 13. The blades could also extend from a die plate which can be wrapped on a die cylinder or from a segment block which can be mounted on a die cylinder.

It will also be appreciated that the die blades can be formed either by milling, as described, or by any other suitable forming process and that the invention has particular applicability to the hardening of blades formed integrally with the underlying die support substrate or structure.

The application of the invention to such dies results in a hardening of the blades and the immediately surrounding die surface area, and it will be appreciated that it is not necessary to harden or heat-treat the entire die cylinder. It is also appreciated that the laser hardened die can be coated with other materials.

It is also appreciated that the laser hardened blades could be further hardened by selective cryogenic treating to eliminate the remaining austentite.

Accordingly, there is described a process by which cutting dies can be manufactured as desired from relatively soft material and thereafter hardened without causing undue distortion or cracking in the die blades or in the areas of the junctions of the die blade material with the underlying integral die structure. It is thus unnecessary to use a more capital intensive and extensive EDM process to form the die blades from previously-hardened materials. This results in speeding up the process by which cutting dies can be manufactured and hardened, and reduces the capital equipment necessary for production of long-life hardened cutting dies.

## Claims

1. A method for producing a cutting die including the steps of forming at least two cutting blades (14, 20, 21) extending from a die surface, hardening the cutting blades by scanning one of the blades (20) with a heat source (10, 11) of sufficient intensity to harden the blade and thereafter scanning the other blade (21) with the heat source to harden the other blade (21), **characterised in that** the blades (20, 21) are formed such that they intersect and **in that** the method includes either introducing a coolant (32, 33) toward said one previously-hardened cutting blade (20) proximate the blade intersection (22) during scanning of the other blade (21) or varying the energy of the heat source (10, 11) as it scans the blades (20, 21) at their intersection (22) to reduce annealing of said one previously-hardened cutting blade (20).

2. A method as claimed in Claim 1 wherein the hardening step includes scanning the blades (14, 20, 21) with a laser beam of sufficient intensity to harden the blade (14, 20, 21).

3. A method as claimed in Claim 2 wherein the scanning step includes moving the laser beam through a path substantially coextensive with the die blades (14, 20, 21) extending from the die surface.

4. A method as claimed in Claim 2 wherein the laser beam is moved through a scanning path complimentary to the extension of the blades (14, 20, 21) on the die surface.

5. A method as claimed in any preceding claim including the further step of further treating the hardened blades (14, 20, 21) at cryogenic temperatures.

## Patentansprüche

1. Verfahren zum Herstellen eines Schneidgesenks mit den Schritten, mindestens zwei Schneidklingen (14, 20, 21) auszubilden, die von der Gesenkfläche sich erstrecken, Härten der Schneidklingen durch Überziehen einer der Klingen (20) mit einer Wärmequelle (10, 11) mit genügender Intensität zum Härten der Klinge und anschließendem Überziehen der anderen Klinge (21) mit der Wärmequelle zum Härten der anderen Klinge (21),
**dadurch gekennzeichnet, dass** die Klingen (20, 21) derart ausgebildet sind, dass sie sich schneiden und dadurch, dass das Verfahren entweder umfasst, ein Kühlmittel (32, 33) auf eine zuvor gehärtete Schneidklinge (20) im Bereich des Schnittpunktes (22) der Klingen anzuwenden, während die andere Klinge (21) überzogen wird, oder die Energie der Wärmequelle (10, 11) an dem Schnittpunkt (22) der Klingen (20, 21) bei deren Überziehen zu variieren und so das Ausglühen der zuvor gehärteten Schneidklinge (20) zu reduzieren.

2. Verfahren gemäß Anspruch 1,
wobei der Schritt des Härtens ein Überziehen der Klingen (14, 20, 21) mit einem Laserstrahl genügend hoher Intensität zum Härten der Klingen (14, 20, 21) umfasst.

3. Verfahren gemäß Anspruch 2,
wobei der Schritt des Überziehens umfasst, dass der Laserstrahl sich entlang eines Grates bewegt, der sich im Wesentlichen zusammen mit den Gesenkklingen (14, 20, 21) von der Gesenkoberfläche erstreckt.

4. Verfahren nach Anspruch 2,
wobei der Laserstrahl über einen Pfad für das Überziehen bewegt wird, der Komplementär ist zur Erstreckung der Klingen (14, 20, 21) auf der Gesenkoberfläche,

5. Verfahren gemäß einem der vorhergehenden Ansprüche einschließlich des zusätzlichen Schrittes,
die gehärteten Klingen (14, 20, 21) bei cryogenen Temperaturen zusätzlich zu behandeln.

## Revendications

1. Procédé pour fabriquer une matrice de découpe comportant les étapes suivantes: façonner au moins deux lames de découpe (14,20,21) s'étendant à partir d'une surface d'une matrice, tremper les lames de découpe en balayant l'une (20) avec une source de chaleur (10,11) ayant une intensité suffisante pour tremper la lame, puis en balayant l'autre lame (21) avec la source de chaleur pour tremper l'autre lame (21), **caractérisé en ce que** les lames sont façonnées de manière à s'intersecter et **en ce que** le procédé inclut soit l'amenée d'une matière de refroidissement (32,33) vers la lame (20) trempée en premier, à proximité de l'intersection (22) des lames pendant le balayage de l'autre lame (21), soit une variation de l'énergie dissipée par la source de chaleur (10,11) lorsqu'elle balaye les lames (20,21) à leur point d'intersection (22), afin de réduire le recuit de la lame (20) trempée en premier.

2. Procédé selon la revendication 1, **caractérisé en ce que** l'étape de trempage comprend un balayage des lames (14,20,21) avec un faisceau laser suffisamment intense pour tremper la lame (14,20,21).

3. Procédé selon la revendication 2, **caractérisé en ce que** le faisceau laser suit une trajectoire d'extension essentiellement identique à celle des lames de matrice (14,20,21) s'étendant à partir de la surface de la matrice.

4. Procédé selon la revendication 2, **caractérisé en ce que** l'on déplace le faisceau laser selon une trajectoire de balayage complémentaire à l'extension des lames (14,20,21) sur la surface de la matrice.

5. Procédé selon une des revendications précédentes, **caractérisé par** un traitement additionnel des lames trempées à des températures cryogéniques (14,20,21).
